# FASCICULE DE BREVET EUROPEEN

(11) **EP 3 724 103 B1**
(45) Date de publication et mention de la délivrance du brevet: **09.02.2022**
(21) Numéro de dépôt: 18833468.4
(22) Date de dépôt: 11.12.2018
(51) Int. Cl.: B65G 1/137

(54) **PROCEDE DE PALETTISATION CENTRALISEE D'OBJETS EN SORTIE DE LIGNES DE PRODUCTION**
VERFAHREN ZUR ZENTRALISIERTEN PALETTIERUNG VON FERTIGUNGSLINIEN VERLASSENDEN GEGENSTÄNDEN
METHOD FOR THE CENTRALIZED PALLETIZATION OF OBJECTS LEAVING PRODUCTION LINES

(30) Priorité: 15.12.2017 FR 1762205
(43) Date de publication de la demande: 21.10.2020
(73) Titulaire: Solystic, 92220 Bagneux (FR)
(72) Inventeur: CHIROL, Luc, 75016 Paris (FR); MIETTE, Emmanuel, 95210 SAINT GRATIEN (FR)
(74) Mandataire: Prugneau, Philippe
(86) Numéro de dépôt international: PCT/FR2018/053201
(87) Numéro de publication internationale: WO 2019/115930

(56) Documents cités:
- EP-A1- 3 162 743
- FR-A1- 3 048 238
- US-A1- 2008 167 884

## Description

### Domaine technique

L'invention se situe dans le domaine de la logistique, et plus précisément dans le domaine de la palettisation d'objets en sortie de lignes de production sur des palettes de stockage, ces objets pouvant être en particulier des produits intermédiaires dans un processus de production ou des articles de courrier comme des colis.

### Technique antérieure

A des fins de transport, des objets issus de lignes de production en parallèle sont fréquemment rangés sur des palettes immédiatement en sortie des lignes, chaque ligne possédant son propre système d'opération de mise en palette.

La palettisation, opération de rangement des objets sur les palettes, est faiblement automatisée en raison de la lourdeur des coûts et des inconvénients des solutions existantes.

Par exemple, dans le système de palettisation décrit dans le document de brevet EP3162743, la surface occupée au sol par l'infrastructure de manipulation des objets produits ou encore les poussières amenées par les palettes dans les ateliers de production sont des inconvénients qui, selon les situations, peuvent être rédhibitoires.

Il est d'autant plus difficile de rentabiliser l'automatisation de stations de palettisation qu'elles sont dédiées chacune à une ligne de production donnée et, selon le débit des objets produits par leur ligne respective, qu'elles sont inactives une bonne partie de leur temps passé en situation d'attente des objets en cours de production.

La demande de brevet US 2008/0167884 divulgue un procédé de préparation de commandes d'articles mettant en œuvre des dispositifs de stockage mobiles d'articles et des unités mobiles de déplacement de ces dispositifs.

La demande de brevet FR 3 048 238 A1 divulgue un système et un procédé de tri d'articles pour la préparation de commandes d'articles reposant sur un tampon de tri motorisé.

### Exposé de l'invention

Un objet de l'invention est d'améliorer la manutention d'objets issus de lignes de production en vue de leur palettisation, les opérations de palettisation proprement dites, et de réduire, en particulier, l'infrastructure et la surface au sol nécessaires à ces usages.

Un autre objet de l'invention est d'améliorer le taux d'emploi d'une station de palettisation en aval de lignes de production d'objets à palettiser.

A cet effet, l'invention a pour objet un procédé de palettisation d'objets, dans lequel on utilise des robots-navettes aptes à déplacer des chariots sous le contrôle d'une unité de contrôle/commande pour manutentionner les objets vers une station de palettisation où les objets sont rangés sur une palette, caractérisé en ce que la station de palettisation est mutualisée entre plusieurs lignes de production des objets, qui sont conditionnés sous forme parallélépipédique, et en ce que le procédé comprend en outre les étapes suivantes :
- déplacer, à l'aide des robots-navettes et sur des chariots de distribution les objets à traiter arrivant en sortie des lignes de production pour les placer dans une station de transbordement où chaque objet est transbordé d'un chariot de distribution vers un chariot d'accumulation sur lequel cet objet est empilé sur d'autres objets parallélépipédiques et identiques extérieurement, destinés à être palettisés sur une même palette ;
- déplacer, à l'aide des robots-navettes sous le commandement de l'unité de contrôle/commande, les chariots d'accumulation pleins d'objets empilés vers une zone de stockage tampon où les objets parallélépipédiques identiques sur chariot d'accumulation sont regroupés par lots dans des allées de circulation des robots-navettes, les objets d'un lot étant destinés à être rangés sur une même palette ; et
- préparer un plan de palettisation au moyen de l'unité de contrôle/commande lorsqu'il est détecté que tous les objets formant un lot destiné à être palettisé sont empilés sur un ou plusieurs chariots d'accumulation situés dans la zone de stockage tampon, et, suite à la préparation dudit plan de palettisation, déplacer lesdits chariots d'accumulation portant les objets du lot à palettiser depuis la zone de stockage tampon pour les ranger sur une palette.

Selon ce procédé, l'infrastructure nécessaire à la manutention des objets et la surface au sol associée peuvent être considérablement réduite puisque, par exemple, des convoyeurs fixes ne sont pas indispensables, et tant les opérations que les matériels peuvent être aisément orientés vers de nouveaux besoins ou de nouvelles priorités.

L'invention peut avantageusement présenter les particularités suivantes :
- lesdits objets peuvent être manutentionnés par les robots-navettes entre plusieurs points de collecte adjacents auxdites lignes de production et la station de palettisation qui est commune auxdits points de collecte,
- l'unité de contrôle/commande peut piloter les robots-navettes pour déplacer les objets de l'un des points de collecte à une station de transbordement où les objets sont transbordés d'un chariot sur un autre chariot apte à porter plusieurs objets empilés,
- l'unité de contrôle/commande peut piloter les robots-navettes pour déplacer ledit autre chariot chargé avec un empilement d'objets de la station de transbordement vers la zone de stockage tampon,
- lesdits objets sont des articles conditionnés en cartons à chaque point de collecte,
- des palettes de types différents sont placées à une position d'attente de palettes adjacente à la station de palettisation,
- l'unité de contrôle/commande détermine un type de palette adapté à la palettisation d'un lot d'objets sur une palette, selon les données de tri, et
- en réponse à la détection, l'unité de contrôle/commande ordonne le déplacement d'une palette correspondante au type de palette déterminé de la position d'attente de palettes à une position de chargement de palettes de la station de palettisation

### Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1A illustre un exemple d'un système de manutention d'objets en vue de leur palettisation capable de mettre en œuvre le procédé selon l'invention ;
- les figures 1B à 1E illustrent des opérations effectuées par le système de la figure 1A ;
- la figure 2 représente des étapes d'un procédé de manipulation d'objets à palettiser selon l'invention, pouvant être mis en œuvre par le système de la figure 1A.

### Description d'un mode de réalisation

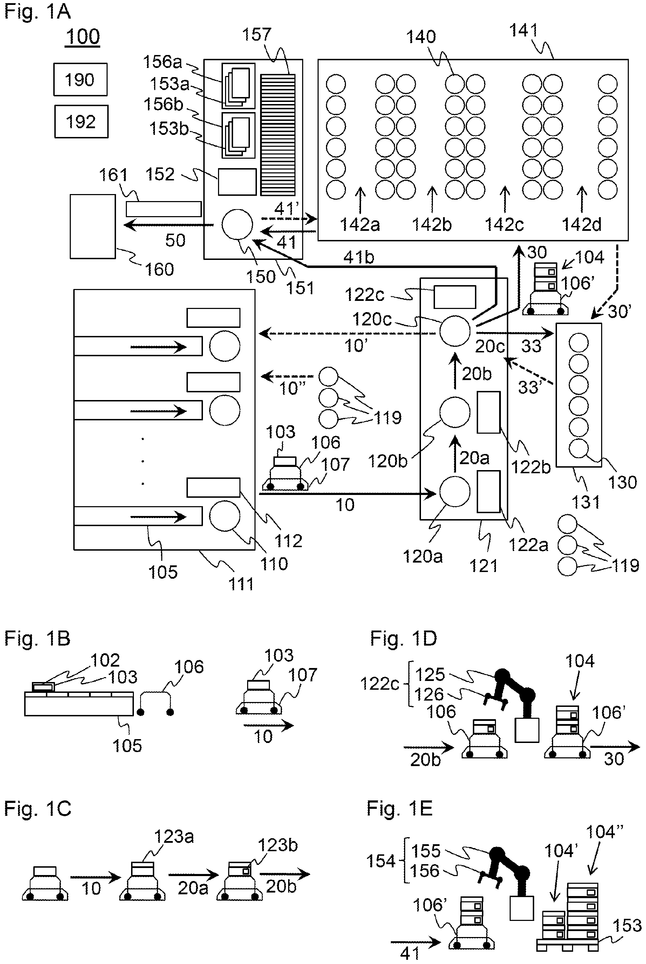

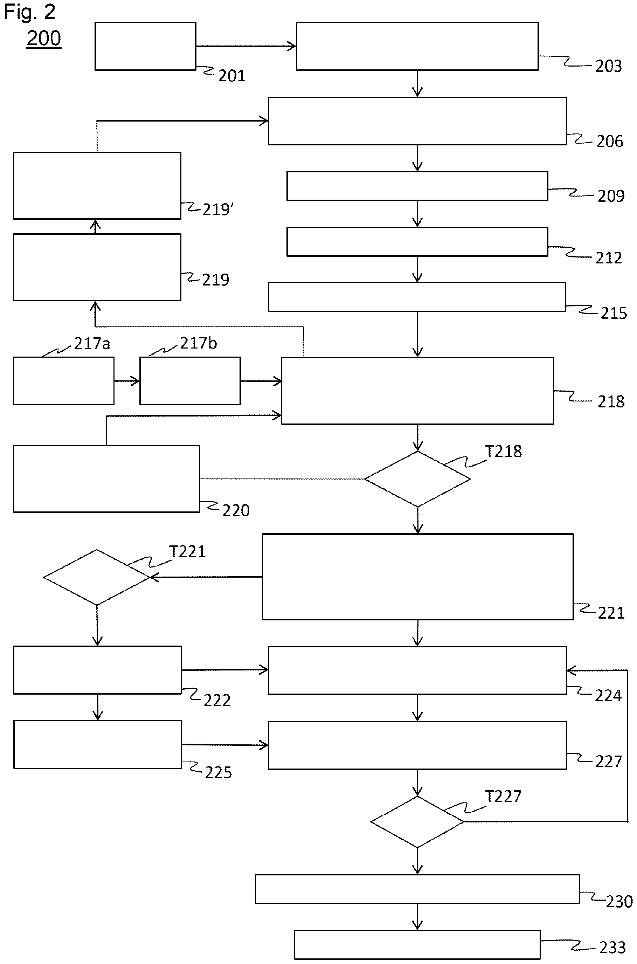

Le mode de réalisation est illustré par les figures 1A à 1E et 2.

Un objet de ce mode de réalisation est un procédé de mutualisation d'une station de palettisation 151 située en aval de lignes de production 105 d'articles 102 dans une usine de production des objets par automatisation d'au moins une partie des opérations de déplacement et de manipulation des articles à l'aide de robots-navettes déplaçant des chariots, ce qui permet en outre de réduire l'importance de l'infrastructure dédiée à la manipulation des articles.

Un agencement possible d'un système 100 de manutention et de palettisation d'objets apte à la mise en œuvre d'un procédé de palettisation des objets selon l'invention est illustré par les figures 1A à 1E.

Comme illustré par les figures 1A et 1B, des lignes de production 105 produisent des objets, ici constitués d'articles 102 conditionnés dans des contenants 103, contenants pouvant être de forme parallélépipédique et donc aisés à empiler, et typiquement des cartons.

Les figures 1A et 1B illustrent la situation de lignes de production produisant directement des articles conditionnés, mais la situation où les articles sont conditionnés au niveau d'une station d'emballage en aval des lignes de production est également considérée dans l'invention.

Des points de collecte 110, matérialisés par des stations d'accueil de distribution, adjacents aux sorties des lignes de production, sont configurés pour accueillir des chariots de distribution 106, tels que des chariots à roulettes, de manière à ce que les objets puissent être chargés sur les chariots de distribution, directement ou par l'intermédiaire d'un moyen de manipulation 112 comme un système comprenant, par exemple, un bras robotisé et son préhenseur.

Un moyen de positionnement des objets sur les chariots peut être utilisé à chaque ligne, par exemple un dispositif pousseur intégré en sortie de ligne de production.

Les chariots de distribution 106 et des robots-navettes 107 sont conçus de sorte que les robots-navettes 107 puissent s'atteler, déplacer, et se dételer des chariots 106 de façon autonome.

En aval des lignes de production 105 se situe une station de fermeture 120a des contenants, configurée pour fermer les contenants, opération réalisée manuellement par un opérateur humain, ou par un dispositif automatisé 122a, par exemple en positionnant un couvercle 123a, illustré en figure 1C, ou en refermant des rabats intégrés aux contenants.

En aval de la station de fermeture se situe une station d'étiquetage 120b, configurée pour fixer une étiquette 123b, illustrée en figure 1C, sur les contenants, opération réalisée manuellement par un opérateur humain, ou par un dispositif automatisé 122b.

En aval de la station d'étiquetage se situe une station de transbordement 120c, configurée pour transborder les objets à partir des chariots de distribution 106 jusque sur des chariots d'accumulation 106', ces derniers pouvant être associés à des robots-navettes de manière similaire aux chariots de distribution 106.

La station de transbordement peut en outre être configurée pour former des piles 104 d'objets identiques ou compatibles entre eux sur les chariots d'accumulation 106', opération effectuée par un opérateur humain ou par un dispositif automatisé de manipulation 122c, par exemple un bras-robot 125 et son préhenseur 126, illustrés en figure 1D.

Des stations d'accueil intermédiaire 130 de chariots d'accumulation 106' sont préférablement localisées à proximité de la station de transbordement 120c dans une zone intermédiaire d'attente 131.

Le système de manutention d'objets peut optionnellement comprendre plusieurs stations de fermeture fonctionnant en parallèle, plusieurs stations d'étiquetage fonctionnant en parallèle et/ou plusieurs stations de transbordement fonctionnant en parallèle.

Des stations d'accueil de stockage 140 de chariots d'accumulation 106' vides ou pleins sont localisées dans une zone de stockage tampon 141.

Les stations d'accueil peuvent être, de manière générale, un simple emplacement au sol, muni ou non de marquage et/ou d'accessoires de maintien des chariots et/ou des robots-navettes.

La station de palettisation 151 peut comprendre un système de rangement 152 d'objets sur une palette 153 de stockage, des dépileurs 156a et 156b de palettes vides 153a et 153b de différents types, un convoyeur 157 d'amenée de palettes vides depuis les dépileurs jusqu'à une position 150 de chargement de palettes et un convoyeur 161 d'évacuation des palettes chargées jusqu'à un dispositif de filmage 160 des palettes chargées.

Le système de rangement 152 de contenant peut être un système manuel de rangement par un opérateur humain, mais comprend de préférence un système automatisé 154 comprenant, par exemple, un bras robotisé 155 et son préhenseur 156, comme illustré en figure 1E.

Une flotte de robots-navettes contrôlée par un système de contrôle/commande 190 est constituée de robots-navettes 107 capables de déplacer les chariots de distribution 106 et les chariots d'accumulation 106' entre les stations d'accueil et les stations de traitement le long de chemins prédéterminés et/ou déterminés par le système de contrôle/commande.

Les robots-navettes peuvent par exemple être des véhicules électriques munis d'une batterie et d'un système de fixation aux chariots, et être commandés par le système de contrôle/commande par communication sans fil.

Le système de contrôle/commande 190 comprend un dispositif de traitement d'information tel un processeur, un dispositif de stockage d'informations tel une mémoire informatique, et des moyens de communication filaires ou sans fil avec les autres éléments du système 100 de manutention et de palettisation d'objets, et en particulier avec une base de données 192 dans laquelle sont stockées des données d'identification et de palettisation des objets, avec des moyens de contrôle de l'avancée des objets des lignes de production jusqu'à la position de chargement des palettes, avec les robots-navettes et avec les stations et/ou dispositifs automatisés de traitement et/ou de manipulation des contenants.

Le système de contrôle/commande est en particulier configuré pour alimenter et rafraîchir la base de données de manière à maintenir à jour des données indiquant les flux d'objets produits ou devant être produits par les lignes de production, la position de chaque objet dans le système de manutention, le nombre et le type d'objets portés par chaque chariot, et la position et la capacité de chargement de chaque chariot, pour déterminer un plan de palettisation indiquant l'ordre de présentation des objets à la station de palettisation pour un lot d'objets donné et le type de palette adapté à chaque lot d'objets, selon des données de tri affectées aux objets.

Le système de manutention d'objets apte à la mise en œuvre d'un procédé de palettisation décrit ci-dessus peut être mis en œuvre par un procédé 200.

Le procédé 200 menant à la palettisation est illustré par les figure 1A à 1E et 2 et décrit ci-dessous en suivant le parcours d'un objet constitué ici d'un article 102 contenu dans un contenant 103 à partir de la sortie de l'une des lignes de production 105 jusqu'à son expédition à sa destination.

Dans ce mode de réalisation, on utilise les robots-navettes 107, qui sont aptes à déplacer les chariots 106 et 106' sous le contrôle d'une unité de contrôle/commande 190 pour manutentionner les objets 102 et/ou 103 entre un point de collecte 110 et une station de palettisation 151 distante du point de collecte, lesdits robots-navettes étant autonomes en déplacement et aptes à s'atteler à un chariot à le déplacer, et à s'en dételer.

Dans ce mode de réalisation particulier, le point de collecte peut être l'une des stations d'accueil de distribution 110 adjacentes aux sorties des lignes de distribution 105, mais il pourrait également se trouver en aval d'une station d'emballage des objets.

La station de palettisation est considérée comme distante des sorties des lignes de productions, ce qui signifie qu'un système de convoyage des objets doit être mis en place pour déplacer les objets des sorties de lignes de production à la station de palettisation pour franchir une distance ou une ouverture dans une cloison ou un mur, ou encore pour faire passer les objets par des stations de traitement des objets telles que détaillé par la suite avant de mener ces objets à la station de palettisation.

De plus, les objets sont manutentionnés par les robots-navettes entre plusieurs points de collecte, qui sont ici des stations d'accueil de distribution, et la station de palettisation qui est commune auxdits points de collecte, c'est-à-dire que la station de palettisation est mutualisée entre les lignes de productions.

Grâce à la mutualisation de la station de palettisation, son taux d'utilisation peut être augmenté par rapport à la situation où chaque ligne de production est associée à une station de palettisation qui lui est dédiée et qui se retrouve en situation d'attente si, par exemple, la ligne de production est à l'arrêt ou si un flux d'objets arrivant aux sorties des lignes de production est insuffisant pour maintenir la station en activité continue.

En particulier, au cours d'une étape 201, des données de tri sont affectées à l'objet constitué d'un moins un l'article 102 et de son contenant 103.

Ces données peuvent indiquer une ou plusieurs caractéristiques de l'objet telles que sa fragilité, son poids, la nécessité de le réfrigérer, un type de l'article et/ou du contenant tel que le matériau et la forme du contenant, une adresse de destination ou de stockage, un numéro de lot auquel appartient l'objet, ou toute autre catégorie définie, par exemple, par un fournisseur, un destinataire, un fabricant ou un transporteur.

Au cours d'une étape 203, l'objet, c'est-à-dire le contenant 103 qui contient au moins un article 102, arrive en bout de ladite ligne de production.

Au cours d'une étape 206, l'objet est chargé sur un chariot de distribution 106 qui était en attente à une station d'accueil de distribution 110 adjacente à une sortie de ladite ligne de production, et un robot-navette 107, contrôlé par le système de contrôle/commande 190, s'attelle audit chariot de distribution.

Le robot-navette venant chercher l'objet chargé sur un chariot peut également être commandé de manière à apporter un chariot disponible à la station d'accueil de distribution 110 et s'en dételer pour s'atteler au chariot chargé de l'objet.

Au cours d'une étape 209, le chariot de distribution chargé est déplacé par le robot-navette d'une zone 111 de sorties de lignes de production 105 selon un chemin 10 pour présenter l'objet à une station de fermeture 120a où le contenant est fermé, éventuellement par un dispositif automatisé 122a.

La figure 1B illustre un chariot 106 à une station d'accueil de distribution 110 en bout d'une ligne de production 105, et un objet (ici représenté par le contenant 103) sur chariot et déplacé selon le chemin 10 par une robot-navette 107, selon les données de tri.

Avant ou après déplacement de l'objet sur chariot à partir de la sortie de ligne de production, par exemple au cours de l'une des étapes 203, 206 et 209, le système de contrôle/commande peut également ordonner à un robot-navette disponible de déplacer un chariot disponible d'une position d'attente 119, par exemple, à la station d'accueil de distribution selon un chemin 10" de manière à remplacer le chariot qui va être déplacé ou a déjà été déplacé.

Alternativement, un chariot en attente dans la zone de stockage 141 peut être employé.

Au cours d'une étape 212, le chariot de distribution est déplacé par robot-navette selon un chemin 20a pour présenter le contenant fermé à une station d'étiquetage 120b où une étiquette, produite automatiquement selon les données de tri, est apposée sur le contenant par un dispositif automatisé 122b, ou manuellement par un opérateur humain.

La figure 1C illustre l'évolution d'un contenant 103 sur un chariot déplacé par robot-navette selon les chemins 10, 20a et 20b, où il est muni d'un couvercle fermé 123a et d'une étiquette 123b au cours des étapes 209 et 212.

Au cours d'une étape 215, le chariot de distribution est déplacé selon un chemin 20b par le robot-navette à une station de transbordement 120c.

Entre l'arrivée de l'objet en bout de ligne de production et la présentation du contenant étiqueté à la station de distribution, un chariot d'accumulation 106' soit vide soit déjà partiellement chargé et en attente à une station d'accueil intermédiaire 130 est transféré à ladite station de transbordement 120c par un robot-navette en suivant, par exemple, un chemin 33'.

L'utilisation de la station d'accueil intermédiaire, située à proximité de la station de transbordement 120c, vise à optimiser les temps de présentations des chariots d'accumulation 106' à la station de transbordement, et donc à limiter les temps d'attente des chariots à la

Le chariot d'accumulation 106' pourrait également provenir directement d'une station d'attente 119 ou de la zone de stockage tampon 141.

En particulier, au cours d'une étape 217a, l'unité de contrôle/commande peut déterminer le type de l'objet à partir des données de tri, puis, en réponse à cette détermination, détecter au cours d'une étape 217b un chariot d'accumulation partiellement chargé d'une pile d'objets du type déterminé dans la zone intermédiaire d'attente 131, et ordonner à un robot-navette de présenter le chariot détecté à la station de transbordement.

Ladite station de distribution intermédiaire 130 peut accueillir des chariots d'accumulation partiellement chargés de piles de contenants dans lesquels se trouvent des articles de différents types, chaque pile étant préférentiellement formée de contenants identiques dans lesquels se trouvent des articles identiques, ou bien des chariots vides.

Alternativement, les contenants formant une pile sont préférablement identiques les uns aux autres, mais peuvent contenir des articles de types différents, l'important étant que des piles stables de contenants puissent être constituées.

Il est ici entendu que des contenants considérés identiques entre eux sont identiques extérieurement en ce qui concerne leurs formes extérieures et leurs dimensions extérieures, critères conditionnant la possibilité d'empiler ces contenants en piles stables.

Au cours d'une étape 218, le contenant étiqueté est transbordé du chariot de distribution 106 sur un chariot d'accumulation 106' au niveau de la station de transbordement 120c, éventuellement par un dispositif automatisé 122c associé à la station de transbordement, comme illustré par la figure 1D, selon les données de tri.

La station de transbordement 120c forme préférablement, sur les chariots d'accumulation 106' et en réponse aux données de tri, des piles de contenants 103 identiques qui contiennent un même type d'article, en empilant un contenant arrivant sur un ou plusieurs contenants déjà présents sur les chariots d'accumulation, de manière manuelle par un opérateur humain, ou par un dispositif automatisé 124, par exemple un bras-robot 125 muni d'un préhenseur 126.

Alternativement, des contenants identiques peuvent contenir des objets de types différents, l'avantage étant que l'on peut alors aisément former des piles de lots hétérogènes, c'est-à-dire des lots comprenant des objets différents les uns des autres.

Au cours d'une étape 219, le chariot de distribution déchargé du contenant étiqueté est amené, directement ou non, à une station d'accueil de distribution 110 disponible par robot-navette.

Le chariot de distribution déchargé peut être amené à une station de distribution via une zone d'attente 119 au cours d'une étape 219' si, par exemple, toutes les stations d'accueil de distribution sont déjà occupées.

Au cours d'une étape de test T218 suivant le transbordement de l'étape 218, l'unité de contrôle/commande détecte si le chariot d'accumulation est non plein après le transbordement du contenant, auquel cas il est transféré le long d'un chemin 33 à une station d'accueil intermédiaire 130 d'une zone intermédiaire 131 au cours d'une étape 220 ; dans le cas où le chariot d'accumulation se trouvait déjà en attente à une station d'accueil de la zone intermédiaire 131 avant d'être transféré à la station de transbordement 120c, il peut par exemple être retourné à la station d'accueil où il se trouvait en attente.

Une station d'accueil 130 de la zone intermédiaire d'attente 131 peut être dédiée à un type de contenant et/ou de contenu, ou à une ligne de production, ce qui permet de faciliter le contrôle de la bonne marche des opérations, en particulier si le contrôle est effectué par un opérateur humain.

Si le chariot d'accumulation est plein après le transbordement du contenant lors de l'étape de test T218, alors il est transféré à une station d'accueil de stockage 140 dans la zone de stockage 141 selon un chemin 30 au cours d'une étape 221, de sorte que les objets sont regroupés dans la zone de stockage.

De plus, en réponse au résultat du test, un chariot d'accumulation vide peut être transféré d'une zone d'attente 119 ou d'une station d'accueil de stockage 140 à la station d'accueil intermédiaire d'origine du chariot d'accumulation selon un chemin 30' pour remplacer celui-ci.

Dans ce document, un chariot plein réfère à un chariot est chargé au maximum de sa capacité ou à un chariot chargé d'objets qui suffisent à compléter un lot à palettiser, et le caractère « plein » du chariot peut être déterminé par exemple sur la base des données enregistrées dans la base de données du système de contrôle/commande.

Au cours d'une étape de test T221, lorsque le système de contrôle/commande détecte que tous les objets formant un lot destiné à être palettisé sont empilés sur un ou plusieurs chariots d'accumulation situés à des stations d'accueil de stockage en réponse aux données de tri et à l'actualisation du statut des chariots (localisation, types et quantité des objets chargés), ledit lot d'objets peut être considéré comme prêt pour l'opération de palettisation opérée par la station de palettisation, et cette opération peut être lancée.

Alternativement, l'opération de palettisation peut être lancée avant que tous les contenants formant le lot soient empilés les chariots d'accumulation situés à des stations d'accueil de stockage.

En effet, au cours de la même étape de test T221, le système de contrôle/commande peut avoir accès à des données sur les flux de production des lignes de production et sur les durées nécessaires au transfert des contenants des lignes de production à la station de palettisation, et il peut éventuellement anticiper la préparation des objets d'un lot donné et leur présentation à la station de palettisation en lançant une opération de palettisation pour les objets du lot donné prêts à être palettisés avant que tous les objets du lot ne soient en zone de stockage tampon, de manière à accélérer les opérations sans que le système de palettisation entre dans une période d'attente de lots non encore prêts à être palettisés.

Dans une telle situation, les objets complétant le lot peuvent être transférés à la station de palettisation sans passer par la zone de stockage, par exemple selon un chemin 41b allant de la station de transbordement 120c à la position 150 de chargement des palettes sans passer par la zone de stockage tampon 141.

Cette opération de palettisation par anticipation peut être lancée lorsque, par exemple, d'autres opérations ne sont pas prévues au même moment pour la station de palettisation.

Dans tous les cas, en réponse à l'étape de test T221, le système de contrôle/commande prépare au cours d'une étape 222 un plan de palettisation basé sur les données de tri, pouvant indiquer en particulier le type de palette à utiliser et l'ordre dans lequel les chariots d'accumulation chargés des contenants formant le lot à palettiser doivent être présentés à la station de palettisation.

Au cours des étapes 209, 212, 215 et 221 de ce mode de réalisation particulier, l'unité de contrôle/commande pilote les robots-navettes pour déplacer les objets sur chariot, lesdits objets consistant en objets conditionnés en contenants, du point de collecte, ici une station d'accueil de distribution, vers une zone de stockage tampon où les objets sur chariot sont regroupés en lots d'objets à palettiser.

Bien entendu, toutes les stations n'ont pas à être systématiquement desservies, et, selon la situation, les objets peuvent être directement amenés à la zone de stockage tampon, ou bien via une, deux ou trois des stations, ou d'autres stations non décrites ici, en fonction des besoins.

Une fois que des objets formant un lot d'objets à palettiser sont regroupés au sein de la zone de stockage tampon, l'unité de contrôle/commande pilote les robots-navettes pour reprendre les objets sur chariot regroupés en lots dans la zone de stockage tampon et les déplacer en séquence vers la station de palettisation.

En particulier, au cours d'une étape 224, un chariot d'accumulation 106' est transféré de l'une des stations d'accueil de stockage 140 pour être présenté à la station de palettisation 150 par un robot-navette selon un chemin 41, en réponse au plan de palettisation.

Ainsi, au cours des étapes 206, 209, 212, 215, 218 et 224, l'unité de contrôle/commande pilote les robots-navettes pour déplacer les objets du point de collecte 110 à la station de transbordement 120c où les objets sont transbordés d'un chariot, ici un chariot de distribution 106, sur un autre chariot, ici un chariot d'accumulation 106', apte à porter plusieurs objets empilés, et pour déplacer ledit autre chariot chargé avec un empilement d'objets de la station transbordement vers la zone de stockage tampon.

Les stations d'accueil de stockage 140 peuvent être regroupées selon leurs fonctions et positionnées en lignes et en colonnes formant des allées de circulation des robots-navettes 142a à 142d, occupant des espaces de stockage dédiés à cet usage et prédéterminés.

Afin de faciliter les déplacements des chariots d'accumulation 106' dans la zone de stockage 141, il peut être préférable que les contenants correspondant à un même lot à palettiser sur une palette unique soient répartis entre les différentes allées de circulation.

De cette manière, lorsque qu'une palette est en cours de chargement dans la station de palettisation, les interférences entre les chariots d'accumulation amenant les objets à charger à la station de palettisation peuvent être minimisées, fluidifiant ainsi le trafic de robots-navettes vides ou déplaçant un chariot.

Alternativement, en particulier dans une situation où l'espace manque, les stations d'accueil de stockage peuvent être réparties dans des zones inoccupées au lieu d'âtre rassemblées dans un lieu unique.

Au cours d'une étape 225, pouvant être concomitante à l'étape 224, une palette vide 153a ou 153b est dépilée d'une position d'attente de palettes vides adjacente à la station de palettisation, telle que l'un des dépileurs 156a et 156b, et est déplacée jusqu'à une position de chargement 150 de la station de palettisation par exemple via le convoyeur 157, et ce en réponse au plan de palettisation, et en particulier au type de palette requis pour le lot à palettiser, comme déterminé et ordonné par le dispositif de contrôle/commande 225.

Le type de palette peut correspondre à une dimension, une structure de palette, une couleur, un matériau (bois, matière plastique, métal), une structure (palette à simple plancher, palette à double plancher, palette réversible, palette à plancher inférieur périmétrique...) ou une combinaison de l'une ou plusieurs de ces caractéristiques.

Le type de palette peut être imposé par le type d'objets à palettiser ou par une requête d'un destinataire ou d'un transporteur, ou par la nature des opérations de manipulation et/ou de transport intervenant par la suite, et peut donc être indiqué en tant que type de palette requis dans les données de tri des objets ou bien être déductible de ces données, par exemple au moyen d'une table d'associations entre des types de palettes et les critères énoncés ci-dessus.

Au cours d'une étape 227, les objets chargés sur un chariot d'accumulation présenté à la station de palettisation au cours de l'étape 224 sont rangés sur la palette 153 convoyée jusqu'à la position de chargement 150 au cours de l'étape 225, selon le plan de palettisation préparé au cours de l'étape 222, puis le chariot déchargé est transféré à une station d'attente 119 ou une station d'accueil de stockage 140 disponible selon un chemin 41'.

Les étapes 224 et 227 sont répétées jusqu'à ce que tous les objets formant le lot à palettiser aient été rangés sur la palette mise en place au cours de l'étape 225.

La figure 1E illustre l'étape 227 de chargement de contenants 103 empilés sur un chariot d'accumulation 106' sur une palette 153 à l'aide d'un dispositif automatisé 154.

Il est à noter que ce procédé est exceptionnellement polyvalent et adaptatif puisqu'il permet de former des palettes de lots hétérogènes, c'est-à-dire constitué d'objets comprenant des articles 102 de types différents et/ou des contenants 103 de types différents.

L'exemple illustré par la figure 1E montre un lot en cours de palettisation comprenant des piles d'objets 104' et 104" formées de contenants de largeurs différentes, et éventuellement d'objets eux-mêmes différents.

Lorsque tous les éléments du lot à palettiser ont été rangés sur la palette, alors la palette constituée au cours des étapes 224 et 227 est considérée comme complète et est transférée à une station de filmage 160 par un système de convoyage 161 selon un chemin 50 où elle est filmée au cours d'une étape 230.

Au cours d'une étape 233, la palette filmée est envoyée vers une destination, par exemple un emplacement de stockage dans un entrepôt, ou chargée dans un camion et expédiée vers une adresse de livraison.

Les stations d'accueil 119, 130, et/ou 140 peuvent être regroupées par fonction, ou bien dispersées et positionnées de manière à occuper des espaces autrement inutilisés mais non spécifiquement dédiés à cet usage.

Quelle que soit la configuration retenue pour les stations d'accueil, afin de minimiser les déplacements en temps et en distance, et donc de minimiser le temps d'utilisation des robots-navettes, leur nombre et la surface au sol occupée par les chemins de déplacement empruntés par ceux-ci, il est préférable que les stations d'accueil de distribution 110 soient plus proches des sorties de lignes de production 105 que les stations d'accueil intermédiaires 130 et les stations d'accueil de stockage 140, que les stations d'accueil intermédiaires soient plus proche de la station de transbordement 120c que les stations d'accueil de distribution et les stations d'accueil de stockage, et que les stations d'accueil de stockage soient plus proches de la position 150 de chargement des palettes que les stations d'accueil de distribution et les stations d'accueil intermédiaires.

## Revendications

1. Procédé de palettisation d'objets issus de plusieurs lignes de production, **caractérisé en ce qu'**on utilise des robots-navettes (107) aptes à déplacer des chariots (106, 106') sous le contrôle d'une unité de contrôle/commande (190) pour manutentionner les objets (102, 103) vers une station de palettisation (151) où les objets sont rangés sur une palette (153), **en ce que** la station de palettisation (151) est mutualisée entre lesdites lignes de production (105) des objets (102, 103), qui sont conditionnés sous forme parallélépipédique, **et en ce que** le procédé comprend en outre les étapes suivantes :
- déplacer (209, 212, 215), à l'aide des robots-navettes et sur des chariots de distribution (106) les objets (102, 103) à traiter arrivant en sortie des lignes de production (105) pour les placer dans une station de transbordement (120c) où chaque objet est transbordé (218) d'un chariot de distribution (106) vers un chariot d'accumulation (106') sur lequel cet objet est empilé sur d'autres objets parallélépipédiques et identiques extérieurement, destinés à être palettisés sur une même palette ;
- déplacer (221), à l'aide des robots-navettes sous le commandement de l'unité de contrôle/commande, les chariots d'accumulation (106') pleins d'objets empilés vers une zone de stockage tampon (141) où les objets parallélépipédiques identiques sur chariot d'accumulation sont regroupés par lots dans des allées de circulation des robots-navettes, les objets d'un lot étant destinés à être rangés sur une même palette ; et
- préparer (222) un plan de palettisation au moyen de l'unité de contrôle/commande lorsqu'il est détecté (T221) que tous les objets formant un lot destiné à être palettisé sont empilés sur un ou plusieurs chariots d'accumulation situés dans la zone de stockage tampon (141), et, suite à la préparation dudit plan de palettisation, déplacer (224) lesdits chariots d'accumulation (106') portant les objets du lot à palettiser depuis la zone de stockage tampon (141) pour les ranger (227) sur une palette.

2. Le procédé de palettisation selon la revendication 1, **caractérisé en ce que** :
- lesdits objets sont manutentionnés par les robots-navettes entre plusieurs points de collecte (110) adjacents auxdites lignes de production (105) et la station de palettisation qui est commune auxdits points de collecte,
- **en ce que** l'unité de contrôle/commande pilote les robots-navettes pour déplacer les objets d'un point de collecte à une station de transbordement (120c) où les objets sont transbordés d'un chariot (106) sur un autre chariot (106') apte à porter plusieurs objets empilés,
- et **en ce que** l'unité de contrôle/commande pilote les robots-navettes pour déplacer ledit autre chariot chargé avec un empilement d'objets de la station transbordement vers la zone de stockage tampon.

3. Le procédé selon l'une quelconque des revendications précédentes, **caractérisé en ce que** lesdits objets sont des articles conditionnés en cartons à chaque point de collecte.

4. Le procédé selon l'une quelconque des revendications précédentes, **caractérisé en ce que** :
- des palettes (153a, 153b) de types différents sont placées à une position d'attente (156a, 156b) de palettes adjacente à la station de palettisation (151) ;
- l'unité de contrôle/commande (190) détermine (222) un type de palette adapté à la palettisation d'un lot d'objets sur une palette (153), selon les données de tri ; et
- en réponse à la détection, l'unité de contrôle/commande ordonne (225) le déplacement d'une palette correspondante au type de palette déterminé de la position d'attente de palettes à une position (150) de chargement de palettes de la station de palettisation (151).

## Patentansprüche

1. Verfahren zur Palettierung von mehrere Fertigungslinien verlassenden Gegenständen, **dadurch gekennzeichnet, dass** Pendelroboter (107) verwendet werden, die geeignet sind, Schlitten (106, 106') unter der Kontrolle einer Kontroll-/Steuereinheit (190) zu verlagern, um die Gegenstände (102, 103) zu einer Palettierungsstation (151) zu befördern, wo die Gegenstände auf einer Palette (153) verstaut werden, dass die Palettierungsstation (151) zwischen den Fertigungslinien (105) der Gegenstände (102, 103), die in parallelflacher Form verpackt werden, zusammengelegt ist, und dass das Verfahren ferner die folgenden Schritte umfasst:
- mit Hilfe der Pendelroboter und auf Verteilungsschlitten (106) Verlagern (209, 212, 215) der zu behandelnden Gegenstände (102, 103), die am Ausgang der Fertigungslinien (105) ankommen, um sie in einer Umladestation (120c) anzuordnen, wo jeder Gegenstand von einem Verteilungsschlitten (106) auf einen Sammelschlitten (106') umgeladen wird (218), auf dem dieser Gegenstand auf weitere parallelflache und äußerlich identische Gegenstände gestapelt wird, die dazu bestimmt sind, auf einer selben Palette palettiert zu werden;
- mit Hilfe der Pendelroboter unter der Steuerung der Kontroll-/Steuereinheit Verlagern (221) der Sammelschlitten (106'), die mit gestapelten Gegenständen gefüllt sind, zu einer Pufferspeicherzone (141), wo die identischen parallelflachen Gegenstände auf dem Sammelschlitten zu Chargen in Umlaufbahnen der Pendelroboter gruppiert werden, wobei die Gegenstände einer Charge dazu bestimmt sind, auf einer selben Palette verstaut zu werden; und
- Vorbereiten (222) einer Palettierungsebene mit Hilfe der Kontroll-/Steuereinheit, wenn erfasst wird (T221), dass alle Gegenstände, die eine Charge bilden, die dazu bestimmt ist, palettiert zu werden, auf einem oder mehreren Sammelschlitten, die sich in der Pufferspeicherzone (141) befinden, gestapelt sind, und nach dem Vorbereiten der Palettierungsebene Verlagern (224) der Sammelschlitten (106'), die die Gegenstände der zu palettierenden Charge tragen, von der Pufferspeicherzone (141), um sie auf einer Palette zu verstauen (227).

2. Palettierungsverfahren nach Anspruch 1, **dadurch gekennzeichnet, dass**:
- die Gegenstände von den Pendelrobotern zwischen mehreren Sammelpunkten (110) befördert werden, die an die Fertigungslinien (105) und die Palettierungsstation, die den Sammelpunkten gemeinsam ist, angrenzen,
- die Kontroll-/Steuereinheit die Pendelroboter steuert, um die Gegenstände von einem Sammelpunkt zu einer Umladestation (120c) zu verlagern, wo die Gegenstände von einem Schlitten (106) auf einen anderen Schlitten (106') umgeladen werden, der geeignet ist, mehrere gestapelte Gegenstände zu tragen,
- die Kontroll-/Steuereinheit die Pendelroboter steuert, um den anderen mit einem Stapel von Gegenständen beladenen Schlitten von der Umladestation zu der Pufferspeicherstation zu verlagern.

3. Verfahren nach einem der vorhergehenden Ansprüche, **dadurch gekennzeichnet, dass** die Gegenstände Artikel sind, die an jedem Sammelpunkt in Kartons verpackt werden.

4. Verfahren nach einem der vorhergehenden Ansprüche, **dadurch gekennzeichnet, dass**:
- Paletten (153a, 153b) unterschiedlicher Typen in einer Paletten-Warteposition (156a, 156b) angeordnet werden, die an die Palettierungsstation (151) angrenzt,
- die Kontroll-/Steuereinheit (190) einen Palettentyp, der für die Palettierung einer Charge von Gegenständen auf einer Palette (153) geeignet ist, nach den Sortierdaten bestimmt (222), und
- die Kontroll-/Steuereinheit als Antwort auf die Erfassung die Verlagerung einer dem bestimmten Palettentyp entsprechenden Palette von der Paletten-Warteposition in eine Paletten-Ladeposition (150) der Palettierungsstation (151) anordnet (225).

## Claims

1. A method of palletizing objects coming from a plurality of production lines, **characterized in that** use is made of shuttle robots (107) suitable for moving trolleys (106, 106') under the control of a monitoring and control unit (190) in order to handle the objects (102, 103) to a palletizing station (151) where the objects are stowed on a pallet (153), **in that** the palletizing station (151) is shared between said plurality of production lines (105) for producing the objects (102, 103), which objects are packaged in rectangular box shapes, **and in that** it further comprises the following steps:
- using the shuttle robots to move (209, 212, 215) the objects (102, 103) for processing on distribution trolleys (106) from the outlets of the production lines (105) so as to place them in a transshipment station (120c) where each object is trans-shipped (218) from a distribution trolley (106) to an accumulation trolley (106') on which the object is stacked on other externally identical rectangular box shaped objects that are to be palletized on a same pallet;
- using the shuttle robots under the control of the monitoring and control unit to move (221) the accumulation trolleys (106') full of stacked objects to a buffer storage zone (141) where the identical rectangular box shaped objects on the accumulation trolley are grouped together by batches in shuttle robot travel aisles, the objects of a batch being for stowing on a same pallet; and
- preparing (222) a palletizing plan by means of the monitoring and control unit when it is detected (T221) that all of the objects making up a batch to be palletized are stacked on one or more accumulation trolleys situated in the buffer storage zone (141), and once said palletizing plan has been prepared, moving (224) said accumulation trolleys (106') carrying the objects of the batch for palletizing from the buffer storage zone (141) in order to stow them (227) on a pallet.

2. The palletizing method according to claim 1, **characterized in that:**
- said objects are handled by the shuttle robots between a plurality of collection points (110) adjacent to said production lines (105) and the palletizing station, which is common to said collection points;
- **in that** the monitoring and control unit controls the shuttle robots to move the objects from a collection point to a transshipment station (120c) where the objects are trans-shipped from one trolley (106) onto another trolley (106') suitable for carrying a plurality of objects in a stack; and
- **in that** the monitoring and control unit controls the shuttle robots to move said other trolleys loaded with respective stacks of objects from the transshipment station to the buffer storage zone.

3. The method according to any preceding claim, **characterized in that** said objects are articles packaged in boxes at each collection point.

4. The method according to any preceding claim, **characterized in that**:
- pallets (153a, 153b) of different types are placed in a pallet waiting position (156a, 156b) adjacent to the palletizing station (151);
- in accordance with sorting data, the monitoring and control unit (190) determines (222) a type of pallet that is adapted to palletizing a batch of objects on a pallet (153); and
- in response to that detection, the monitoring and control unit instructs (225) a pallet corresponding to the determined pallet type to be moved from the pallet waiting position to a pallet loading position (150) of the palletizing station (151).
